# EUROPEAN PATENT APPLICATION

(11) **EP 2 309 104 A1**
(43) Date of publication of application: **13.04.2011**
(21) Application number: 08752400.5
(22) Date of filing: 25.04.2008
(51) Int. Cl.: F01N 3/08, F01N 3/02, F01N 3/20, F01N 3/36, F02D 41/04

(54) **EXHAUST PURIFICATION SYSTEM FOR INTERNAL COMBUSTION ENGINE**

(71) Applicant: Toyota Jidosha Kabushiki Kaisha, Toyota-shi, Aichi 471-8571 (JP)
(72) Inventor: AOYAMA, Taro, Toyota-shi Aichi 471-8571 (JP)
(74) Representative: Intès, Didier Gérard André
(86) International application number: PCT/JP2008/058508
(87) International publication number: WO 2009/130800

(57) **Abstract**

There is provided a technology that enables easier adjustment of the temperature of an exhaust gas purification apparatus to a target value by supplying an appropriate quantity of fuel to the exhaust gas purification apparatus even in the case where sub-injection and exhaust addition are performed in an exhaust gas purification system for an internal combustion engine. The system includes a fuel addition valve that adds fuel to the exhaust gas in an exhaust passage upstream of the exhaust gas purification apparatus and unburned fuel discharge means for discharging gas containing unburned fuel from the combustion chamber of the internal combustion engine to the exhaust passage, wherein when supplying fuel to the exhaust gas purification apparatus to make the temperature of the exhaust gas purification catalyst equal to a target temperature, the quantity of fuel supplied by the fuel addition valve is controlled by a feedback control, and the quantity of fuel supplied by the unburned fuel discharge means is controlled by an open-loop control.

## Description

### TECHNICAL FIELD

The present invention relates to an exhaust gas purification system for an internal combustion engine.

### BACKGROUND ART

There is a known technology in which a particulate filter (which will be simply referred to as a "filter" hereinafter) is provided in an exhaust passage of an internal combustion engine so that particulate matter (which will be referred to as "PM" hereinafter) contained in the exhaust gas of the internal combustion engine will not be emitted to the atmosphere.

PM contained in the exhaust gas is once trapped by the filter. As the amount of PM trapped in the filter becomes larger, the pressure of the exhaust gas upstream of the filter will increase, and there is a possibility that a decrease in the output power of the internal combustion engine and a deterioration in the fuel economy will be invited thereby. In such cases, the PM deposited on the filter can be removed by oxidizing it. Such removal of PM trapped on the filter will be referred to as "regeneration of the filter".

To perform the regeneration of the filter, a catalyst having an oxidizing ability is provided upstream of the filter, or a catalyst having an oxidizing ability is arranged to be supported on the filter itself. The regeneration of the filter is performed by supplying fuel to the catalyst, thereby raising the temperature of the filter.

An NOx storage reduction catalyst (which will be hereinafter referred to as the "NOx catalyst") stores sulfur components contained in fuel as well as NOx. The sulfur components thus stored is more difficult to be released than NOx and accumulates in the NOx catalyst. This is called sulfur poisoning. Since the sulfur poisoning causes a decrease in the NOx removal rate of the NOx catalyst, it is necessary to perform a sulfur poisoning recovery process for recovery from the sulfur poisoning at an appropriate time. The sulfur poisoning recovery process is performed by making the temperature of the NOx catalyst high and letting the exhaust gas having a theoretical air-fuel ratio or a rich air-fuel ratio flow through the NOx catalyst. The temperature of the NOx catalyst can be made high by supplying fuel to the NOx catalyst to raise the temperature of the NOx catalyst.

Supply of fuel to the catalyst can be achieved by, for example, providing a fuel addition valve in the exhaust passage and adding fuel to the exhaust gas through the fuel addition valve (which will be hereinafter referred to as the "exhaust addition" hereinafter). Fuel may also be supplied to the catalyst by performing sub-injection (after-injection or post injection) in which fuel is injected again during the expansion stroke or the exhaust stroke again after performing main fuel injection in the cylinder.

There is a known technique of controlling the temperature of a catalyst and a filter by using both the sub-injection and the exhaust addition (see, for example, patent document 1: Japanese Patent Application Laid-Open No. 2005-83350, patent document 2: Japanese Patent Application Laid-Open No. 2005-83352, and patent document 3: Japanese Patent Application Laid-Open No. 2005-83351).

In cases where the injection of fuel into the cylinder is performed multiple times, as is the case with the sub-injection, pulsation of the fuel pressure occurring at the time of the first fuel injection might sometimes affect the fuel pressure at the time of later fuel injection. For this reason, it is sometimes more difficult to control the fuel quantity precisely in the sub-injection than in the exhaust addition. Furthermore, when the sub-injection is performed, there is a possibility that lubricant oil may be diluted due to what is called bore flushing in which fuel adheres to the cylinder wall surface to wash away the lubricant oil. Furthermore, if an EGR apparatus is provided, there is a possibility that fuel may enter the EGR apparatus to cause clogging of an EGR cooler or to make the EGR valve difficult to operate. Furthermore, if the distance from the combustion chamber to the exhaust gas purification apparatus is long, it is difficult to control the sub-injection quantity when regulating the sub-injection quantity in order to adjust the temperature of the exhaust gas purification apparatus to a target value, because it takes time for the temperature of the exhaust gas purification apparatus to change.

However, since fuel supplied by the sub-injection has been vaporized or is in a reactive state, it has an advantage that it readily reacts in the catalyst.

On the other hand, fuel supplied by the exhaust addition reaches the catalyst in a liquid state in some cases. Therefore, if only the exhaust addition is performed, there will sometimes occur HC poisoning in which HC adheres to the upstream end portion of the catalyst. Furthermore, there is a possibility that fuel that reaches the catalyst in a liquid state may evaporate in the catalyst to decrease the temperature of the upstream portion of the catalyst. For the above reasons, when the exhaust addition is performed, there is a possibility that clogging in the upstream end of the catalyst may occur, and/or the overall temperature of the catalyst may become lower than active temperatures, thereby making regeneration of the filter impossible.

However, the addition of fuel does not causes dilution of lubricant oil unlike with the sub-injection and allows supply of fuel in a wide operation range irrespective of the operation state of the internal combustion engine. If the fuel addition valve is provided immediately upstream of the exhaust gas purification apparatus, the quantity of exhaust addition can easily be controlled because the temperature of the exhaust gas purification apparatus changes immediately when the quantity of exhaust addition is regulated in order to adjust the temperature of the exhaust purification apparatus to a target value.

As above, the sub-injection and the exhaust addition both have advantages and disadvantages. It is difficult to adjust the temperature of the filter or the NOx catalyst to a target value only by the sub-injection, because it is difficult to control the quantity of fuel precisely.

### DISCLOSURE OF THE INVENTION

The present invention has been made in view of the above described problems, and an object of the present invention is to provide a technology that enables easier adjustment of the temperature of an exhaust gas purification apparatus to a target value by supplying an appropriate quantity of fuel to the exhaust gas purification apparatus even in the case where the sub-injection and the exhaust addition are performed in an exhaust gas purification system for an internal combustion engine.

To achieve the above object, an exhaust gas purification system for an internal combustion engine according to the present invention is characterized by comprising:
an exhaust gas purification apparatus that is provided in an exhaust passage of the internal combustion engine and of which a purification capability is recovered by supply of fuel thereto;
a fuel addition valve that adds fuel to exhaust gas in the exhaust passage upstream of said exhaust gas purification apparatus; and
unburned fuel discharge means for discharging gas containing unburned fuel from a combustion chamber of said internal combustion engine to the exhaust passage,
wherein when supplying fuel to said exhaust gas purification apparatus to make the temperature of the exhaust gas purification catalyst equal to a target temperature, the quantity of fuel supplied by said fuel addition valve is controlled by a feedback control, and the quantity of fuel supplied by said unburned fuel discharge means is controlled by an open-loop control.

The temperature of the exhaust gas purification apparatus is raised by supply of fuel at the time when its purification capability is recovered. The time when the purification capability is recovered may includes, for example, the time when NOx stored in an NOx catalyst is reduced, the time when recovery from sulfur poisoning of the NOx catalyst is performed, and the time when particulate matter deposited on a particulate filter is oxidized (namely the time when regeneration of the filter is performed). When the purification capability of the exhaust gas purification apparatus is recovered, fuel is supplied to the exhaust gas purification apparatus through the fuel addition valve and/or fuel is supplied to the exhaust gas purification apparatus through the unburned fuel discharge means. The supply of fuel through the fuel addition valve and the supply of fuel through the unburned fuel discharge means may be performed at the same time, or only either one of them may be performed.

It is difficult to adjust the quantity of fuel supplied through the unburned fuel discharge means to a target value, because it is influenced by pulsation of the fuel pressure. In other words, even if a feedback control of the fuel supply quantity is performed by sensing the temperature of the exhaust gas purification apparatus so as to make the temperature close to a target temperature, it is difficult to adjust the quantity of fuel supplied by the unburned fuel discharge means precisely. Therefore it is difficult to adjust the temperature to the target value by a feedback control.

In contrast to this, according to the present invention, the quantity of fuel supplied by the unburned fuel discharge means is controlled by an open loop control. Namely, a predetermined quantity of fuel is supplied. This predetermined quantity may be changed in accordance with the operation state of the internal combustion engine (e.g. the engine speed or the engine load).

On the other hand, the quantity of fuel supplied through the fuel addition valve can be adjusted more precisely as compared to the quantity of fuel supplied through the unburned fuel discharge means. Therefore, it is possible to correct the fuel supply quantity by feedback-controlling the quantity of fuel supplied through the fuel addition valve. Consequently, the temperature of the exhaust gas purification apparatus can be adjusted to the target value quickly.

According to the present invention, said exhaust gas purification apparatus is provided with a catalyst, and the supply of fuel by said unburned fuel discharge means may be stopped when the temperature of the catalyst is not lower than an active temperature.

Since the fuel supplied into the combustion chamber is exposed to high temperature combustion gas, most part of the fuel is in a vaporized state or reformed state as it is discharged from the internal combustion engine. In consequence, the fuel discharge from the internal combustion engine is apt to react in the exhaust gas purification apparatus.

On the other hand, the fuel added through the fuel addition valve is added to the exhaust gas having a temperature lower than the temperature in the interior of the combustion chamber, and therefore it is harder to be vaporized as compared to the fuel supplied into the cylinder. Therefore, it sometimes reaches the exhaust purification apparatus in a liquid state. Even if fuel is vaporized, the exhaust gas in which the air-fuel ratio is locally low due to insufficient diffusion of fuel reaches the exhaust gas purification apparatus, in some cases. In such cases, it is difficult to raise the temperature of the exhaust gas purification apparatus by adding fuel through the fuel addition valve.

In the meantime, the supply of fuel through the unburned fuel discharge means may cause bore flushing and/or invite deterioration in the fuel economy. On the other hand, if the temperature of the catalyst is not lower than the active temperature, even the fuel supplied through the fuel addition valve can react in the catalyst. Therefore, when the temperature of the catalyst is not lower than the active temperature, the temperature of the exhaust gas purification apparatus can be raised while preventing bore flushing from occurring, by stopping the supply of fuel through the unburned fuel discharge means and performing only the supply of fuel through the fuel addition valve. When the temperature of the catalyst is lower than the active temperature, the supply of fuel through the fuel addition valve and the supply of fuel through the unburned fuel discharge means may be performed at the same time, or only the supply of fuel through the unburned fuel discharge means may be performed.

According to the present invention, fuel may be supplied through said unburned fuel discharge means at predetermined intervals even while fuel is supplied through said fuel addition valve.

If fuel is supplied only through the fuel addition valve, fuel may adhere to the upstream end portion of the exhaust gas purification apparatus, or the temperature of the upstream end portion may decrease, in some cases. This leads to the occurrence of clogging in the upstream end portion and/or a decrease in the overall temperature of the exhaust gas purification apparatus, in some cases. In contrast, if the supply of fuel by the unburned fuel discharge means is performed periodically, reactive fuel can be supplied to the exhaust purification apparatus, and therefore temperature of the upstream end portion can be raised. This can prevent clogging in the upstream end portion of the exhaust gas purification apparatus and a decrease in the overall temperature of the exhaust gas purification apparatus from occurring.

Said predetermined interval may be equal to, for example, time taken for the amount of fuel added through the fuel addition valve and adhering to the exhaust gas purification apparatus to exceed a threshold, or a predetermined specific time period. The length of the predetermined interval may be changed in accordance with the operation state of the internal combustion engine.

As described in the foregoing, according to the present invention, in an exhaust gas purification system for an internal combustion engine, easier adjustment of the temperature of an exhaust gas purification apparatus to a target value can be achieved by supplying an appropriate quantity of fuel to the exhaust gas purification apparatus even in the case where the sub-injection and the exhaust addition are performed.

### BRIEF DESCRIPTION OF THE DRAWINGS

Fig. 1 is a diagram showing the general configuration of an internal combustion engine to which an exhaust gas purification system for an internal combustion engine according to an embodiment is applied and its air-intake system and exhaust system.
Fig. 2 is a flow chart showing a flow of a temperature raising control during regeneration of a filter in the embodiment.

### THE BEST MODE FOR CARRYING OUT THE INVENTION

In the following, a specific embodiment of the exhaust gas purification system for an internal combustion engine according to the present invention will be described with reference to the drawings.

### (Embodiment 1)

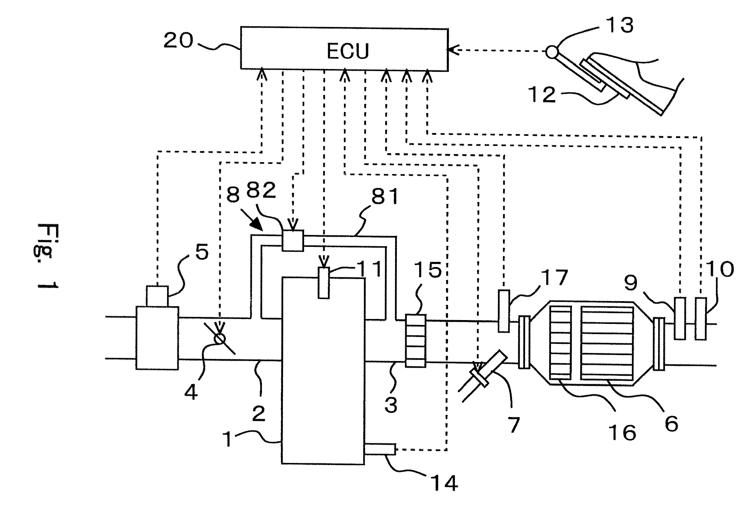

Fig. 1 is a diagram showing the general configuration of an internal combustion engine 1 to which an exhaust gas purification system for an internal combustion engine according to this embodiment is applied and its air-intake system and exhaust system. The internal combustion engine 1 shown in Fig. 1 is a water-cooled four-stroke-cycle diesel engine.

The internal combustion engine 1 is connected with an intake passage 2 and an exhaust passage 3. A throttle 4 is provided in the middle of the intake passage 2. The throttle 4 is opened/closed by an electric actuator. An air flow meter 5 that outputs a signal indicative of the flow rate of the intake air flowing in the intake passage 2 is provided in the intake passage 2 upstream of the throttle 4. The quantity of fresh intake air of the internal combustion engine 1 is measured by this air flow meter 5.

On the other hand, in the middle of the exhaust passage 3, there are provided, in order from the internal combustion engine 1 side, a first oxidation catalyst 15, a second oxidation catalyst 16, and a particulate filter 6 (which will be hereinafter referred to as the "filter 6"). The filter 6 may support an oxidation catalyst, a three-way catalyst, or an NOx storage reduction catalyst. In this embodiment, the second oxidation catalyst 16 and the filter 6 correspond to the exhaust gas purification apparatus according to the present invention.

Furthermore, in this embodiment, a fuel addition valve 7 that adds fuel (light oil) serving as a reducing agent to the exhaust gas flowing in the exhaust passage 3 downstream of the first oxidation catalyst 15 and upstream of the second oxidation catalyst 16 is provided. The fuel addition valve 7 is opened by a signal from an ECU 20, which will be described later, to inject fuel. The fuel injected through the fuel addition valve 7 into the exhaust passage 3 flows into the second oxidation catalyst 16 together with the exhaust gas flowing from upstream in the exhaust passage 3 and is oxidized in the second oxidation catalyst 16. The temperature of the filter 6 is raised by the heat of reaction generated thereby.

The internal combustion engine 1 is provided with an EGR apparatus 8 that recirculates a portion of the exhaust gas flowing in the exhaust passage 3 to the intake passage 2. The EGR apparatus 8 includes an EGR passage 81 and an EGR valve 82.

The EGR passage 81 connects the exhaust passage 3 upstream of the first oxidation catalyst 15 and the intake passage 2 downstream of the throttle 4. The recirculation of exhaust gas is achieved by the exhaust gas flow through the EGR passage 81. The EGR valve 82 adjusts the cross sectional area of the channel of the EGR passage 81, thereby regulating the quantity of EGR gas flowing in the EGR passage 81.

A downstream temperature sensor 9 that outputs a signal indicative of the temperature of the exhaust gas flowing in the exhaust passage 3 and an air fuel ratio sensor 10 that outputs a signal indicative of the air-fuel ratio of the exhaust gas flowing in the exhaust passage 3 are attached to the exhaust passage 3 downstream of the filter 6. The temperature of the filter 6 is measured based on the output signal of the downstream temperature sensor 9. Furthermore, an upstream temperature sensor 17 that outputs a signal indicative of the temperature of the exhaust gas flowing in the exhaust passage 3 is attached to the exhaust passage 3 between the first oxidation catalyst 15 and the second oxidation catalyst 16.

Furthermore, the internal combustion engine 1 is provided with a fuel injection valve 11 that supplies fuel into a cylinder of the internal combustion engine 1.

An ECU 20 or an electronic control unit for controlling the internal combustion engine 1 is annexed to the internal combustion engine 1 having the above-described configuration. The ECU 20 is a unit that controls the operation state of the internal combustion engine 1 in accordance with operation conditions of the internal combustion engine 1 and requests of the driver.

The ECU 20 is connected, through electrical wiring, with an accelerator opening degree sensor 13 that outputs an electrical signal indicative of the amount of operation of the accelerator pedal 12 depressed by the driver to enable detection of the engine load and a crank position sensor 14 that senses the engine speed, in addition to the above described sensors. Output signals of these various sensors are input to the ECU 20. The ECU 20 is also connected with the fuel injection valve 11 and the fuel addition valve 7 through electrical wiring. The opening/closing times of the fuel injection valve 11 and the fuel addition valve 7 are controlled by the ECU 20.

In this embodiment, when regeneration of the filter is performed, the temperature of the exhaust gas is raised by supplying fuel to the second oxidation catalyst 16, and the exhaust gas whose temperature has been thus raised is caused to flow through the filter 6, thereby raising the temperature of the filter 6. The supply of fuel is stopped at the time when the temperature of the filter 6 reaches a temperature that is needed for oxidation of PM, thereby maintaining the temperature of the filter 6. Since the exhaust gas contains oxygen even during the time in which the temperature of the filter 6 is raised, the PM trapped in the filter 6 is oxidized.

When the sulfur poisoning recovery process for an NOx catalyst is performed in the case where the NOx storage reduction catalyst is supported on the filter 6 also, the temperature of the filter 6 is raised to a temperature needed for recovery from sulfur poisoning by supplying fuel to the second oxidation catalyst 16 in a similar manner. Thereafter, the sulfur poisoning recovery control is performed by supplying fuel intermittently.

Such supply of fuel to the second oxidation catalyst 16 can be achieved by injecting fuel through the fuel addition valve 7 and/or by decreasing the air-fuel ratio of the exhaust gas discharged from the internal combustion engine 1. In other words, regeneration or recovery from sulfur poisoning of the filter 6 can be performed by supplying fuel to the second oxidation catalyst 16 by these means.

Gas containing fuel can be discharged from the internal combustion engine 1 by performing sub-injection (after-injection or post injection) in which fuel is injected through the fuel injection valve 11 during the expansion stroke or the exhaust stroke again after performing main fuel injection. At the same time, the intake air quantity may be decreased, and/or the EGR gas quantity may be increased. In this embodiment, the ECU 20 that performs the sub-injection correspond to the unburied fuel discharge means according to the present invention.

The intake air quantity can be decreased by operating the throttle 4 in the closing direction. The EGR gas quantity can be increased by operating the EGR valve 82 in the opening direction.

Hereinafter, the injection of fuel through the fuel addition valve 7 will be referred to as the "exhaust addition".

When the main fuel injection for venerating torque is performed through the fuel injection valve 11, pulsation of the fuel pressure can occur due to a sudden decrease in the pressure of fuel supplied to the fuel injection valve 11. If the sub-injection is performed immediately after the main injection, the injection quantity will sometimes become unstable because the fuel injected by the sub-injection is affected by pulsation of the fuel pressure caused by the main injection, in some cases. In such cases, even if a feedback control that adjusts the sub-injection quantity so as to make the temperature measured by the downstream temperature sensor 9 close to a target temperature is performed, it might be difficult to make the measured temperature close to the target temperature.

On the other hand, the exhaust addition is performed at intervals longer than the intervals of the main injection and the sub-injection by the fuel injection valve 11 at a low fuel pressure. Therefore, the exhaust addition is hard to be affected by pulsation of the fuel pressure. Therefore, when a feedback control that adjusts the quantity of exhaust addition so as to make the temperature measured by the downstream temperature sensor 9 close to a target temperature is performed, the measured temperature can easily be made close to the target temperature.

In view of the above, in this embodiment, the sub-injection quantity is adjusted by an open loop control, and the exhaust addition quantity is adjusted by a feedback control.

Since the fuel supplied by the sub-injection is vaporized by the heat of the gas burned in the combustion chamber, it easily reacts in the second oxidation catalyst 16. On the other hand, when the sub-injection is performed, fuel will adhere to the cylinder wall surface, thereby diluting lubricant oil due to mixing of the lubricant oil and fuel. Furthermore, if the fuel ejected to the exhaust passage 3 by the sub-injection flows into the EGR passage 81 and adheres to the EGR valve 82, there is a possibility that the EGR valve 82 may become difficult to operate.

On the other hand, since the exhaust addition can be performed with little influence of the load of the internal combustion engine 1, it can be performed in a wider operation range than the sub-injection. However, there is an operation range in which the NOx reduction efficiency is deteriorated due to difficulty in diffusion of fuel and/or adhesion of fuel to the wall surface of the exhaust passage 3.

In view of this, in this embodiment, when the temperature of the catalyst to which the fuel supplied by the exhaust addition reaches first (that is, in this embodiment, the second oxidation catalyst 16) reaches an active temperature, namely a temperature at which the reaction of fuel can be achieved satisfactorily (e.g. 25°C to 300°C), the sub-injection is not performed, but only the exhaust addition is performed. Specifically, the exhaust addition is performed if fuel can react in the second oxidation catalyst 16. Thus, the fuel reacts in the second oxidation catalyst 16, and the temperature of the filter 6 can be raised. Not performing the sub-injection can prevent the bore flushing.

The sub-injection may be performed at regular intervals even while the temperature of the filter 6 is being raised or maintained by the exhaust addition as described above. Even after the temperature of the second oxidation catalyst 16 has reached the active temperature, there is a possibility that HC poisoning may occur while the exhaust addition is performed due to adhesion of liquid fuel to the upstream end portion of the second oxidation catalyst 16. In addition, there is a possibility that the temperature of the upstream end portion of the second oxidation catalyst 16 may become lower than the active temperature with the vaporization of the fuel adhering to the upstream end portion of the second oxidation catalyst 16. If this occurs, there is a possibility that clogging may occur in the upstream end portion of the second oxidation catalyst 16, and/or the overall temperature of the second oxidation catalyst 16 may become lower than the active temperature.

In contrast, if the sub-injection is performed periodically, fuel having a high reactivity can be supplied to the second oxidation catalyst 16 periodically, and therefore a decrease in the temperature of the second oxidation catalyst 16 can be prevented. Furthermore, by the exhaust addition, the fuel adhering to the upstream end portion of the second oxidation catalyst 16 can be removed by reaction. The time at which the sub-injection is performed may be the time at which clogging of the second oxidation catalyst 16 can occur, which may be determined in advance by, for example, an experiment. Alternatively, the amount of HC poisoning of the second oxidation catalyst 16 may be estimated based on the exhaust addition quantity, the flow rate of the exhaust gas, and the temperature of the exhaust gas etc, and the sub-injection may be performed at the amount of HC poisoning reaches a threshold. Still alternatively, the sub-injection may be performed at predetermined time intervals.

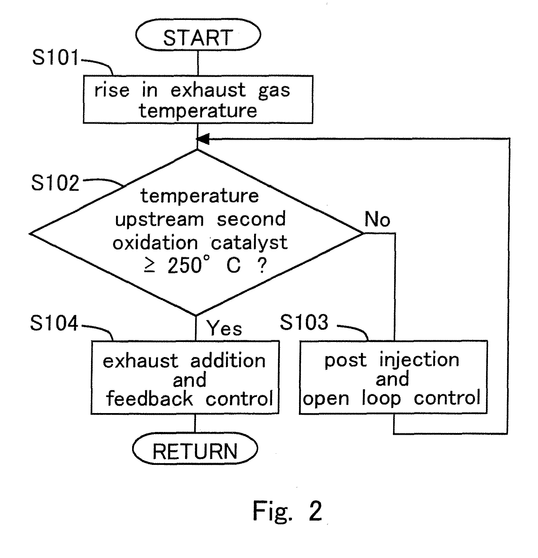

Next, a temperature raising control during the regeneration of the filter 6 in this embodiment will be described. Fig. 2 is a flow chart showing a flow of the temperature raising control during the regeneration of the filter 6 in this embodiment. This routine is executed repeatedly at predetermined time intervals during the regeneration of the filter 6. A similar temperature raising control may be performed also during the sulfur poisoning recovery for the NOx catalyst.

In step S101, the temperature of the exhaust gas is raised. In this step, the temperature of the first oxidation catalyst 15 is raised. If the temperature of the first oxidation catalyst 15 is raised to an active temperature, the fuel supplied by the sub-injection can react in the first oxidation catalyst 15. Since the volume of the first oxidation catalyst 15 is small as compared to the second oxidation catalyst 16, a portion of the fuel supplied by the sub-injection flows downstream without reacting, even if the oxidation catalyst 15 is at an active temperature.

In this step, the delayed injection in which the timing of the main injection by the fuel injection valve 11 is delayed or the after-injection is performed, thereby burning fuel in the combustion chamber to raise the temperature of the exhaust gas. The temperature of the exhaust gas can be further raised by closing the EGR valve 82 and/or closing the throttle 4, at the same time. In cases where the system is equipped with an exhaust throttle valve, the opening degree of the exhaust throttle valve may be adjusted. These components may be controlled based on a map related to the engine speed and the engine load.

In step S102, a determination is made as to whether or not the temperature of the exhaust gas flowing into the second oxidation catalyst 16 is equal to or higher than e.g. 250°C. This temperature is a temperature at which the fuel supplied by the exhaust addition can react in the second oxidation catalyst 16, which is, for example, an active temperature of the second oxidation catalyst 16. The temperature of the exhaust gas can be measured by the upstream temperature sensor 17.

If the determination in step S102 is affirmative, the process proceeds to step S104. On the other hand, if the determination in step S102 is negative, the process proceeds to step S103.

In step S103, the post injection is performed. The quantity of fuel injected by the post injection is controlled by an open loop control. If the first oxidation catalyst 15 is at an active temperature, a portion of the fuel discharged by the post injection reacts in the first catalyst 15, and therefore the temperature of the exhaust gas is raised. The ECU 20 determines the open timing and the open time of the fuel injection valve 11 in such a way that a fuel injection quantity that has been determined in relation to, for example, the engine speed and the engine load in advance by an experiment is achieved. Then, the process returns to step S102.

In step S104, the exhaust addition is performed. In this step, since the temperature of the second oxidation catalyst 16 has been raised enough, the fuel supplied by the exhaust addition reacts in the second oxidation catalyst 16. The exhaust addition quantity at this time is determined based on the required heat value. The required heat value is determined based on how much heat is to be generated by the exhaust addition to achieve the target temperature. This is determined based on the temperature of the exhaust gas measured by the upstream temperature sensor 17, the heat capacities of the second oxidation catalyst 16 and the filter 6, and the flow rate of the exhaust gas.

A feedback control for adjusting the exhaust addition quantity is performed in such a way that the temperature of the filter 6 measured by the downstream temperature sensor 9 becomes equal to a target temperature. The target temperature is a temperature needed for the regeneration of the filter 6. At this time, the exhaust addition quantity is corrected by learning, and in the subsequent occasions of the exhaust addition, the exhaust addition quantity corrected by learning is used. If the sub-injection controlled by an open loop control and the exhaust addition controlled by a feedback control are performed at the same time, the exhaust addition quantity is influenced by changes in the sub-injection quantity. However, since the response time of the exhaust addition from the addition of fuel to the rise of the temperature of the filter 6 is short, the temperature of the filter 6 can be controlled satisfactorily by the exhaust addition. Although the learning control of the exhaust addition quantity is also influenced by changes in the sub-injection quantity, the influence can be decreased by performing the learning over a long period of time or multiple times.

As described in the foregoing, according to the embodiment, since a feedback control is used when performing the exhaust addition while not used when performing the sub-injection, the temperature of the filter 6 can easily be adjusted to a target temperature. Furthermore, since the sub-injection is stopped after the temperature of the second oxidation catalyst 16 has risen to, for example, an active temperature, dilution of lubricant oil by fuel can be prevented. Still further, by performing the sub-injection periodically even after the temperature of the second oxidation catalyst 16 has become equal to or higher than, for example, the active temperature, a decrease in the temperature of the second oxidation catalyst 16 and clogging of the second oxidation catalyst 16 can be prevented from occurring.

## Claims

1. An exhaust gas purification system for an internal combustion engine **characterized by** comprising:
an exhaust gas purification apparatus that is provided in an exhaust passage of the internal combustion engine and of which a purification capability is recovered by supply of fuel thereto;
a fuel addition valve that adds fuel to exhaust gas in the exhaust passage upstream of said exhaust gas purification apparatus; and
unburned fuel discharge means for discharging gas containing unburned fuel from a combustion chamber of said internal combustion engine to the exhaust passage,
wherein when supplying fuel to said exhaust gas purification apparatus to make the temperature of the exhaust gas purification catalyst equal to a target temperature, the quantity of fuel supplied by said fuel addition valve is controlled by a feedback control, and the quantity of fuel supplied by said unburned fuel discharge means is controlled by an open-loop control.

2. An exhaust purification system for an internal combustion engine according to claim 1, **characterized in that** said exhaust purification apparatus has a catalyst, and when the temperature of the catalyst is not lower than an active temperature, supply of fuel by said unburned fuel discharge means is stopped.

3. An exhaust gas purification system for an internal combustion engine according to claim 1 or 2, **characterized in that** fuel is supplied at predetermined intervals by said unburned fuel discharge means even while fuel is supplied by said fuel addition valve.
